# EUROPÄISCHE PATENTSCHRIFT

(11) **EP 2 735 210 B1**
(45) Veröffentlichungstag und Bekanntmachung des Hinweises auf die Patenterteilung: **28.12.2016**
(21) Anmeldenummer: 12740935.7
(22) Anmeldetag: 20.07.2012
(51) Int. Cl.: H05B 6/06

(54) **TEMPERATURMESSUNG IM KOCHGEFÄSS**
TEMPERATURE MEASUREMENT IN A COOKING VESSEL
MESURE DE LA TEMPÉRATURE DANS UN RÉCIPIENT DE CUISSON

(30) Priorität: 22.07.2011 DE 102011079689
(43) Veröffentlichungstag der Anmeldung: 28.05.2014
(73) Patentinhaber: E.G.O. Elektro-Gerätebau GmbH, 75038 Oberderdingen (DE)
(72) Erfinder: LANG, Steffen, 75038 Oberderdingen (DE)
(74) Vertreter: Patentanwälte Ruff, Wilhelm, Beier, Dauster & Partner mbB
(86) Internationale Anmeldenummer: PCT/EP2012/064320
(87) Internationale Veröffentlichungsnummer: WO 2013/014090

(56) Entgegenhaltungen:
- WO-A1-2007/122049
- WO-A1-2007/122050
- WO-A1-2010/080738
- DE-A1-102008 054 906

## Beschreibung

Die Erfindung betrifft ein Verfahren zur Übertragung von Daten eines Sensors, der einem induktiv beheizbaren Kochgefäß zugeordnet ist, zu einer Lesevorrichtung, eine Sensorvorrichtung für ein induktiv beheizbares Kochgefäß, ein Kochgefäß, eine Induktionsheizvorrichtung und ein System.

Häufig ist es zur exakten Steuerung bzw. Regelung eines Garprozesses notwendig, die Temperatur des Garguts möglichst exakt zu erfassen.

In der DE 10 2009 047 185 A1 sind ein Verfahren und eine Vorrichtung beschrieben, die es ermöglichen, durch Auswerten von spezifischen Parametern eine Temperatur eines mittels einer Induktionsheizspule erwärmten Kochgefäßbodens zu ermitteln. Kochgutabhängige Effekte, insbesondere bei der Zubereitung von stärke- und eiweißhaltigen Lebensmitteln, erschweren jedoch eine eindeutige Ermittlung der Kochguttemperatur in Abhängigkeit von der Temperatur des Kochgefäßbodens.

Es kann daher notwendig sein, einen dedizierten Sensor zur Messung der Kochguttemperatur vorzusehen. Die Temperatur- bzw. Sensordaten müssen dann geeignet zu einer Lesevorrichtung übertragen werden, die diese dann auswertet, beispielsweise einen Kochprozeß automatisch unter Berücksichtigung der Kochguttemperatur steuert.

Die DE 10 2008 054 906 A1 offenbart ein Verfahren und eine Vorrichtung, bei denen Daten drahtlos zwischen einem Aufsatzgerät und einem Betriebsgerät übertragen werden.

Der Erfindung liegt die Aufgabe zugrunde, ein Verfahren zur Übertragung von Daten eines Sensors, der einem induktiv beheizbaren Kochgefäß zugeordnet ist, zu einer Lesevorrichtung, eine Sensorvorrichtung für ein induktiv beheizbares Kochgefäß, ein Kochgefäß, eine Induktionsheizvorrichtung und ein System zur Verfügung zu stellen, die eine zuverlässige und kostengünstige Realisierung der Sensordatenübertragung ermöglichen.

Die Erfindung löst diese Aufgabe durch ein Verfahren nach Anspruch 1, eine Sensorvorrichtung nach Anspruch 5, ein Kochgefäß nach Anspruch 10, eine Induktionsheizvorrichtung nach Anspruch 12 und ein System nach Anspruch 13. Bevorzugte Ausführungsformen sind Gegenstand der Unteransprüche, deren Wortlaut hiermit durch Bezugnahme zum Inhalt der Beschreibung gemacht wird.

Bei dem Verfahren zur Übertragung von Daten eines Sensors zu einer Lesevorrichtung, wobei der Sensor einem induktiv beheizbaren Kochgefäß zugeordnet ist, indem er beispielsweise innerhalb des Kochgefäßes angeordnet ist, um eine Temperatur von Gargut zu erfassen, das sich in dem Kochgefäß befindet, wird herkömmlich mittels eines Umrichters aus einer Netzwechselspannung eine hochfrequente Ansteuerspannung erzeugt, wobei ein Schwingkreis mit einer Induktionsheizspule mit der hochfrequenten Ansteuerspannung beaufschlagt wird, um ein hochfrequentes magnetisches Wechselfeld zum Beheizen des Kochgefäßes zu erzeugen. Die Frequenz der Ansteuerspannung kann beispielsweise in einem Bereich zwischen 20 kHz bis 50 kHz liegen. Das Beaufschlagen des Schwingkreises mit der hochfrequenten Ansteuerspannung wird während eines vorgegebenen ersten Zeitbereichs symmetrisch oder asymmetrisch um einen Nulldurchgang der Netzwechselspannung unterbrochen, um eine eigenresonante Schwingung des Schwingkreises zu bewirken. Der erste Zeitbereich kann beispielsweise dadurch vorgegeben sein, dass ein Betrag der Netzwechselspannung während des ersten Zeitbereichs kleiner als ein vorgegebener Wert ist, beispielsweise kleiner als 25 V, insbesondere kleiner als 18 V. Während eines zweiten Zeitbereichs, der vollständig innerhalb des ersten Zeitbereichs liegt und mit dem ersten Zeitbereich identisch sein kann, wird eine Impedanz einer induktiv bzw. magnetisch mit der Induktionsheizspule gekoppelten Antenne, die dem Kochgefäß zugeordnet ist oder Teil des Kochgefäßes sein kann, in Abhängigkeit von zu übertragenden Daten des Sensors geändert, d.h. es wird eine Lastmodulation durchgeführt. Bei binärer Übertragung der Daten kann beispielsweise einer logischen Eins eine betragsmäßig hohe Impedanz und einer logischen Null eine betragsmäßig niedrige Impedanz zugeordnet werden, oder umgekehrt. Die Impedanzänderung bewirkt eine Änderung der Resonanzfrequenz der eigenresonanten Schwingung. Schließlich werden die übertragenen Daten des Sensors in der Lesevorrichtung dekodiert, indem eine Resonanzfrequenz, insbesondere eine Resonanzfrequenzänderung, der eigenresonanten Schwingung des Schwingkreises erfasst und ausgewertet wird.

In einer Weiterbildung wird mittels des hochfrequenten magnetischen Wechselfelds eine Schaltung kontaktlos mit Betriebsenergie versorgt, die dazu ausgebildet ist, die Daten des Sensors zu erfassen und die Impedanz der induktiv mit der Induktionsheizspule gekoppelten Antenne in Abhängigkeit von den zu übertragenden Daten zu ändern.

In einer Weiterbildung sind die Daten des Sensors Temperaturdaten von Gargut, welches mittels des Kochgefäßes bzw. in dem Kochgefäß erwärmt wird.

In einer Weiterbildung werden die Daten des Sensors mittels bzw. als Teil eines Datentelegramms übertragen, wobei das Datentelegramm mindestens ein Startbit und/oder mindestens ein Sicherungsbit enthält.

Die Sensorvorrichtung für ein induktiv beheizbares Kochgefäß weist auf: mindestens einen Sensor zum Erfassen einer kochgefäßbezogenen Messgröße, insbesondere einer Temperatur von Gargut, welches mittels des Kochgefäßes erwärmt wird, eine Antenne, die induktiv mit einer Induktionsheizspule einer Induktionsheizvorrichtung koppelbar ist, wobei die Induktionsheizvorrichtung mittels eines Umrichters aus einer Netzwechselspannung eine hochfrequente Ansteuerspannung für die Induktionsheizspule erzeugt, Mittel zum Ändern einer Impedanz der Antenne, Mittel zum Detektieren eines Zeitbereichs um einen Nulldurchgang der Netzwechselspannung und eine Steuervorrichtung, die dazu ausgebildet ist, Daten des mindestens einen Sensors zu ermitteln und die Mittel zum Ändern der Impedanz der Antenne derart anzusteuern, dass die Impedanz der Antenne in Abhängigkeit von den ermittelten Daten des mindestens einen Sensors während des Zeitbereichs um den Nulldurchgang der Netzwechselspannung verändert wird.

In einer Weiterbildung umfasst die Antenne eine Spule bzw. die Antenne ist eine Spule.

In einer Weiterbildung umfassen die Mittel zum Ändern der Impedanz der Antenne ein Schaltmittel, welches zusätzlich zu weiteren Bauelementen oder ohne weitere Bauelemente zwischen Anschlüsse der Spule eingeschleift ist.

In einer Weiterbildung umfassen die Mittel zum Detektieren des Zeitbereichs um den Nulldurchgang der Netzwechselspannung Mittel zur Messung einer, insbesondere gleichgerichteten, Antennenspannung.

In einer Weiterbildung ist eine Energieversorgungsvorrichtung vorgesehen, die dazu ausgebildet ist, aus einem an der Antenne anstehenden Signal Betriebsenergie für die Sensorvorrichtung zu erzeugen.

Ein erfindungsgemäßes Kochgefäß weist eine oben genannte Sensorvorrichtung auf.

In einer Weiterbildung ist die Antenne, insbesondere in Form einer ein- oder mehrwindigen Spule, an einem Kochgefäßboden angeordnet bzw. bildet denjenigen Teil des Kochgefäßes, der im Betrieb mit einer Glaskeramikplatte eines Induktionskochfelds in Kontakt steht.

Die erfindungsgemäße Induktionsheizvorrichtung weist auf: einen Schwingkreis, der eine Induktionsheizspule umfasst, einen Umrichter, der aus einer Netzwechselspannung eine hochfrequente Ansteuerspannung erzeugt, wobei der Schwingkreis mit der hochfrequenten Ansteuerspannung beaufschlagt wird, um ein hochfrequentes magnetisches Wechselfeld zum Beheizen eines Kochgefäßes zu erzeugen, Mittel zum Detektieren eines Zeitbereichs um einen Nulldurchgang der Netzwechselspannung und eine Steuervorrichtung, die dazu ausgebildet ist, das Beaufschlagen des Schwingkreises mit der hochfrequenten Ansteuerspannung während des Zeitbereichs um den Nulldurchgang der Netzwechselspannung zu unterbrechen, um eine eigenresonante Schwingung des Schwingkreises zu bewirken bzw. zu ermöglichen, eine Resonanzfrequenz, insbesondere eine Resonanzfrequenzänderung, der eigenresonanten Schwingung des Schwingkreises zu ermitteln und übertragene Daten anhand der ermittelten Resonanzfrequenz bzw. Resonanzfrequenzänderung zu dekodieren.

Das erfindungsgemäße System ist zur Durchführung des oben genannten Verfahrens ausgebildet und weist eine oben genannte Sensorvorrichtung und eine oben genannte Induktionsheizvorrichtung auf.

Die Erfindung wird nachfolgend unter Bezugnahme auf die Zeichnungen beschrieben, die bevorzugte Ausführungsformen darstellen. Hierbei zeigt schematisch:
- Fig. 1: ein System aufweisend ein induktiv beheizbares Kochgefäß mit einer Sensorvorrichtung sowie eine Induktionsheizvorrichtung und
- Fig. 2: einen Verlauf einer Netzwechselspannung sowie einen ersten Zeitbereich einer eigenresonanten Schwingung und einen zweiten Zeitbereich, während dem eine Übertragung von Sensordaten erfolgt.

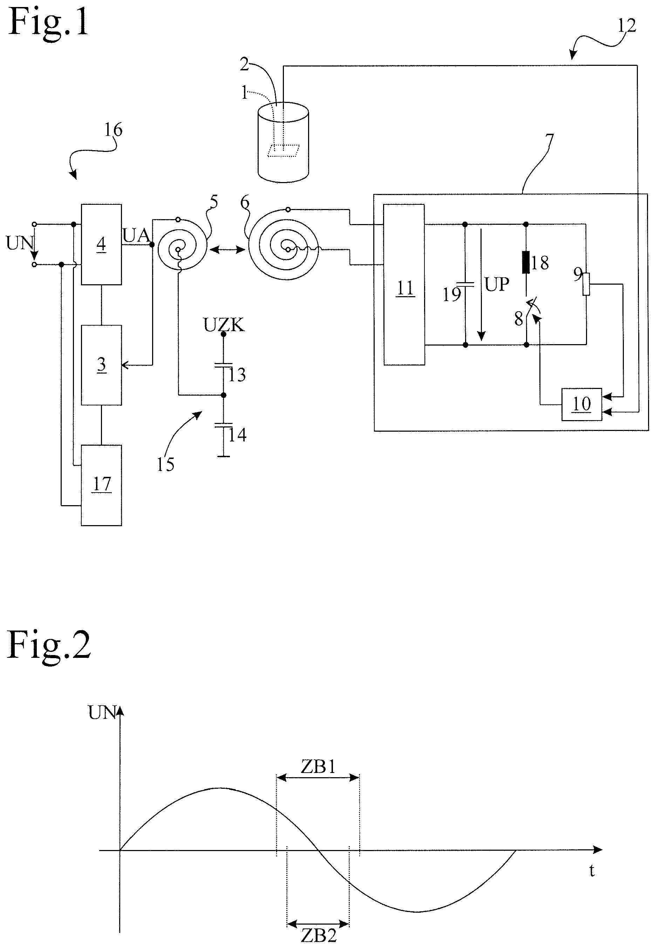

Fig. 1 zeigt ein System mit einem induktiv beheizbaren Kochgefäß 2, das eine Sensorvorrichtung 12 aufweist, sowie einer Induktionsheizvorrichtung 16.

Die Sensorvorrichtung 12 weist auf: einen Temperatursensor 1 in Form eines herkömmlichen NTC-Temperatursensors zum Erfassen einer Temperatur von Gargut, welches mittels des Kochgefäßes 2 erwärmt wird, wobei der Sensor innerhalb des Kochgefäßes 2, beispielsweise innerhalb eines nicht dargestellten Hohlraums in den Seitenwänden oder am Boden des Kochgefäßes 2 oder an flexiblen Zuleitungen frei beweglich innerhalb des Kochgefäßes 2, beispielsweise in Form eines Kerntemperaturfühlers, angeordnet ist, eine Antenne in Form einer Spule 6, die induktiv bzw. magnetisch mit einer Induktionsheizspule 5 der Induktionsheizvorrichtung 16 koppelbar ist, eine Energieversorgungsvorrichtung in Form eines Gleichrichters, beispielsweise eines Brückengleichrichters, 11, der eine Ausgangsspannung der Spule 6 gleichrichtet, wobei die gleichgerichtete Spannung UP nach einer Glättung durch einen Glättungskondensator 19 die Sensorvorrichtung 12 bzw. eine zugrundeliegende Schaltung 7 versorgt, Mittel zum Ändern einer wirksamen Impedanz der Spule 6 in Form eines Schaltmittels 8, beispielsweise in Form eines Transistors, mit vorgeschalteter Begrenzungsdrossel 18, wobei das Schaltmittel 8 zwischen Anschlüsse der Spule 6 bzw. den Ausgang des Gleichrichters 11 eingeschleift ist, Mittel zum Detektieren eines Zeitbereichs (siehe Fig. 2 "ZB2") um einen Nulldurchgang der Netzwechselspannung UN in Form eines Spannungsdetektors 9 zur Messung eines Pegels der gleichgerichteten Antennenspannung UP und eine Steuervorrichtung in Form eines Mikrocontrollers 10, der dazu ausgebildet ist, Daten des Sensors 1 herkömmlich zu ermitteln, beispielsweise mittels A/D-Wandlung, und das Schaltmittel 8 derart anzusteuern, dass die Impedanz der Spule 6 in Abhängigkeit von den ermittelten Daten des Sensors während des Zeitbereichs ZB2 um den Nulldurchgang der Netzwechselspannung UN verändert wird.

Die Induktionsheizvorrichtung 16 weist einen Schwingkreis 15 auf, der die Induktionsheizspule 5 und Kondensatoren 13 und 14 umfasst, wobei die Kondensatoren 13 und 14 herkömmlich zwischen eine Zwischenkreisspannung UZK eingeschleift sind.

Ein herkömmlicher Umrichter 4 erzeugt aus der Netzwechselspannung UN, beispielsweise mittels einer Halbbrücke, eine hochfrequente Ansteuerspannung UA, wobei der Schwingkreis 15 mit der hochfrequenten Ansteuerspannung UA beaufschlagt wird, um ein hochfrequentes magnetisches Wechselfeld zum Beheizen des Kochgefäßes 2 zu erzeugen.

Die Induktionsheizvorrichtung 16 umfasst ferner Mittel 17 zum Detektieren eines Zeitbereichs (siehe Fig. 2 "ZB1") um einen Nulldurchgang der Netzwechselspannung UN. Der Zeitbereich ZB1 kann beispielsweise dadurch detektiert bzw. definiert werden, dass ein Betrag der Netzwechselspannung UN während des Zeitbereichs ZB1 kleiner als ein vorgegebener Wert ist, beispielsweise kleiner als 25 V, insbesondere kleiner als 18 V. Die Mittel 17 überwachen für diesen Fall den Pegel der Netzwechselspannung UN und detektieren auf diese Weise den Zeitbereich ZB1 um den Nulldurchgang der Netzwechselspannung UN.

Weiter ist eine Steuervorrichtung in Form eines Mikrocontrollers 3 vorgesehen, der dazu ausgebildet ist, das Beaufschlagen des Schwingkreises 15 mit der hochfrequenten Ansteuerspannung UA während des Zeitbereichs ZB1 zu unterbrechen, um eine eigenresonante Schwingung des Schwingkreises 15 zu bewirken, eine Resonanzfrequenzänderung der eigenresonanten Schwingung des Schwingkreises 15 zu ermitteln und von der Sensorvorrichtung 12 übertragene Daten anhand der ermittelten Resonanzfrequenzänderung zu dekodieren. Der Mikrocontroller 3, der Bestandteil der Induktionsheizvorrichtung 16 ist, erfüllt folglich herkömmliche Ansteuerfunktionen einer Induktionsheizvorrichtung und zusätzlich die Funktion einer Lesevorrichtung, die die übertragenen Daten des Sensors 1 empfängt und geeignet auswertet. Die Induktionsheizspule 5 dient gleichzeitig als Empfangsantenne, so dass keine spezifische Empfangsantenne und keine separate Lesevorrichtung vorzusehen ist.

Die Sensorvorrichtung 12 kann Bestandteil des Kochgefäßes 2 sein oder mit dem Kochgefäß 2 lösbar verbunden sein, wobei die Spule 6 an einem Boden des Kochgefäßes 2 vorgesehen ist und die verbleibenden Bestandteile beispielsweise in einen nicht dargestellten Griff oder Hohlraum des Kochgefäßes 2 integriert sein können, wo sie vor hohen Temperaturen geschützt sind. Bei einer lösbaren Verbindung kann die Sensorvorrichtung 12 oder ein Teil der Sensorvorrichtung 12 beispielsweise in einen Kunststoffrahmen integriert sein, der auf ein herkömmliches Kochgefäß aufgesteckt wird.

Fig. 2 zeigt zur Verdeutlichung einen Verlauf der Netzwechselspannung UN sowie den Zeitbereich ZB1 der eigenresonanten Schwingung des Schwingkreises 15 und den Zeitbereich ZB2, während dem eine Übertragung von Sensordaten erfolgt.

Es versteht sich, dass anstelle eines einzelnen Sensors auch mehrere Sensoren vorgesehen sein können, die dann an unterschiedlichen Positionen des Kochgefäßes 2 angeordnet sein können. Hierbei besteht die Möglichkeit, dass ein über alle Sensoren errechneter Mittelwert zur Lesevorrichtung 3 übertragen wird oder dass die Daten aller Sensoren zur Lesevorrichtung übertragen werden.

Die erfindungsgemäße Induktionsheizvorrichtung 16 ist auch dazu geeignet, Kochgefäße zu erwärmen, die nicht über eine erfindungsgemäße Sensorvorrichtung 12 verfügen. Für diesen Fall erkennt die Induktionsheizvorrichtung 16 bzw. deren Lesevorrichtung 3 das Fehlen von Sensordaten und geht dann in einen herkömmlichen Betriebszustand ohne Sensor-Temperaturerfassung über.

Andererseits kann die erfindungsgemäße Sensorvorrichtung 12 auch auf einer herkömmlichen Induktionsheizvorrichtung betrieben werden. Für diesen Fall oder grundsätzlich kann die Sensorvorrichtung 12 weiter einen Tongenerator umfassen, der bei Überschreiten einer Sensor-Grenztemperatur ein akustisches Warnsignal ausgibt, um eine Beschädigung des Kochgefäßes 2 zu verhindern.

Es versteht sich, dass zusätzlich oder alternativ zu Temperatursensoren auch Sensoren für weitere Messgrößen vorgesehen sein können, beispielsweise Drucksensoren im Fall von Dampfdruckkochgefäßen usw.

## Patentansprüche

1. Verfahren zur Übertragung von Daten eines Sensors (1), der einem induktiv beheizbaren Kochgefäß (2) zugeordnet ist, zu einer Lesevorrichtung (3), bei dem
- mittels eines Umrichters (4) aus einer Netzwechselspannung (UN) eine hochfrequente Ansteuerspannung (UA) erzeugt wird, wobei ein Schwingkreis (15) mit einer Induktionsheizspule (5) mit der hochfrequenten Ansteuerspannung beaufschlagt wird, um ein hochfrequentes magnetisches Wechselfeld zum Beheizen des Kochgefäßes zu erzeugen,
**gekennzeichnet durch** die Schritte:
- Unterbrechen des Beaufschlagens des Schwingkreises mit der hochfrequenten Ansteuerspannung während eines vorgegebenen ersten Zeitbereichs (ZB1) um einen Nulldurchgang der Netzwechselspannung, um eine eigenresonante Schwingung des Schwingkreises zu bewirken,
- Ändern einer Impedanz einer induktiv mit der Induktionsheizspule gekoppelten Antenne (6), die dem Kochgefäß zugeordnet ist, in Abhängigkeit von zu übertragenden Daten des Sensors während eines zweiten Zeitbereichs (ZB2), der innerhalb des ersten Zeitbereichs liegt, und
- Dekodieren der übertragenen Daten des Sensors in der Lesevorrichtung, indem eine Resonanzfrequenz, insbesondere eine Resonanzfrequenzänderung, der eigenresonanten Schwingung des Schwingkreises ausgewertet wird.

2. Verfahren nach Anspruch 1, **dadurch gekennzeichnet, dass** mittels des hochfrequenten magnetischen Wechselfelds eine Schaltung (7) kontaktlos mit Betriebsenergie versorgt wird, die dazu ausgebildet ist, die Daten des Sensors zu erfassen und die Impedanz der induktiv mit der Induktionsheizspule gekoppelten Antenne in Abhängigkeit von den zu übertragenden Daten zu ändern.

3. Verfahren nach Anspruch 1 oder 2, **dadurch gekennzeichnet, dass** die Daten des Sensors Temperaturdaten von Gargut sind, welches mittels des Kochgefäßes erwärmt wird.

4. Verfahren nach einem der vorhergehenden Ansprüche, **dadurch gekennzeichnet, dass** die Daten des Sensors mittels eines Datentelegramms übertragen werden, wobei das Datentelegramm mindestens ein Startbit und/oder mindestens ein Sicherungsbit enthält.

5. Sensorvorrichtung (12) für ein induktiv beheizbares Kochgefäß (2), mit
- einem Sensor (1) zum Erfassen einer kochgefäßbezogenen Messgröße, insbesondere einer Temperatur von Gargut, welches mittels des Kochgefäßes erwärmt wird,
- einer Antenne (6), die induktiv mit einer Induktionsheizspule (5) einer Induktionsheizvorrichtung (16) koppelbar ist, wobei die Induktionsheizvorrichtung mittels eines Umrichters (4) aus einer Netzwechselspannung (UN) eine hochfrequente Ansteuerspannung (UA) für die Induktionsheizspule erzeugt,
- Mitteln (8) zum Ändern einer Impedanz der Antenne,
- Mitteln (9) zum Detektieren eines Zeitbereichs (ZB2) um einen Nulldurchgang der Netzwechselspannung und
- einer Steuervorrichtung (10), die dazu ausgebildet ist, Daten des Sensors zu ermitteln und die Mittel zum Ändern der Impedanz der Antenne derart anzusteuern, dass die Impedanz der Antenne in Abhängigkeit von den ermittelten Daten des Sensors während des Zeitbereichs um den Nulldurchgang der Netzwechselspannung verändert wird.

6. Sensorvorrichtung nach Anspruch 5, **dadurch gekennzeichnet, dass** die Antenne eine Spule (6) umfasst.

7. Sensorvorrichtung nach Anspruch 6, **dadurch gekennzeichnet, dass** die Mittel zum Ändern der Impedanz der Antenne ein Schaltmittel (8) umfassen, welches zwischen Anschlüsse der Spule eingeschleift ist.

8. Sensorvorrichtung nach einem der Ansprüche 5 bis 7, **dadurch gekennzeichnet, dass** die Mittel zum Detektieren des Zeitbereichs um den Nulldurchgang der Netzwechselspannung Mittel zur Messung einer, insbesondere gleichgerichteten, Antennenspannung (UP) umfassen.

9. Sensorvorrichtung nach einem der Ansprüche 5 bis 8, **gekennzeichnet durch** eine Energieversorgungsvorrichtung (11), die dazu ausgebildet ist, aus einem an der Antenne anstehenden Signal Betriebsenergie für die Sensorvorrichtung zu erzeugen.

10. Kochgefäß (2) mit einer Sensorvorrichtung (12) nach einem der Ansprüche 5 bis 9.

11. Kochgefäß nach Anspruch 10, **dadurch gekennzeichnet, dass** die Antenne, insbesondere in Form einer Spule, an einem Kochgefäßboden angeordnet ist.

12. Induktionsheizvorrichtung (16), mit
- einem Schwingkreis (15), der eine Induktionsheizspule (5) aufweist,
- einem Umrichter (4), der aus einer Netzwechselspannung (UN) eine hochfrequente Ansteuerspannung (UA) erzeugt, wobei der Schwingkreis mit der hochfrequenten Ansteuerspannung beaufschlagt wird, um ein hochfrequentes magnetisches Wechselfeld zum Beheizen eines Kochgefäßes (2) zu erzeugen,
- Mitteln (17) zum Detektieren eines Zeitbereichs (ZB1) um einen Nulldurchgang der Netzwechselspannung und
- einer Steuervorrichtung (3), die dazu ausgebildet ist,
- das Beaufschlagen des Schwingkreises mit der hochfrequenten Ansteuerspannung während des Zeitbereichs um den Nulldurchgang der Netzwechselspannung zu unterbrechen, um eine eigenresonante Schwingung des Schwingkreises zu bewirken,
- eine Resonanzfrequenz, insbesondere eine Resonanzfrequenzänderung, der eigenresonanten Schwingung des Schwingkreises zu ermitteln, und
- übertragene Daten eines Sensors (1), der einem induktiv beheizbaren Kochgefäß (2) zugeordnet ist, anhand der ermittelten Resonanzfrequenz bzw. Resonanzfrequenzänderung zu dekodieren.

13. System, das zur Durchführung des Verfahrens nach einem der Ansprüche 1 bis 4 ausgebildet ist, mit
- einer Sensorvorrichtung (12) nach einem der Ansprüche 5 bis 9 und
- einer Induktionsheizvorrichtung nach Anspruch 12.

14. System nach Anspruch 13, **gekennzeichnet durch** ein Kochgefäß (2) nach Anspruch 10 oder 11.

## Claims

1. A method for transmitting to a reading device (3) data of a sensor (1) that is allocated to an inductively heatable cooking vessel (2), wherein:
- a high frequency control voltage (UA) is generated from a mains alternating voltage (UN) by means of a convertor (4), wherein the high frequency control voltage is applied to an oscillator circuit (15) having an induction heating coil (5) in order to generate a high frequency magnetic alternating field for heating the cooking vessel; **characterized by** the steps:
- interrupting the applying of the high frequency control voltage to the oscillator circuit during a predefined first time region (ZB1) covering a zero crossing point of the mains alternating voltage in order to cause a self-resonant oscillation of the oscillator circuit;
- changing an impedance of an antenna (6) that is inductively coupled to the induction heating coil, which antenna is allocated to the cooking vessel, in dependence upon the data of the sensor, which data is to be transmitted, during a second time region (ZB2) that lies within the first time region; and
- decoding the transmitted data of the sensor in the reading device, in that a resonant frequency, in particular a resonant frequency change, of the self-resonant oscillation of the oscillator circuit is evaluated.

2. The method according to claim 1, **characterized in that** a circuit (7) is supplied with operating energy in a contactless manner by means of the high frequency magnetic alternating field, said circuit being adapted to capture the data of the sensor and, in dependence upon the data that is to be transmitted, to change the impedance of the antenna that is inductively coupled to the induction heating coil.

3. The method according to claim 1 or 2, **characterized in that** the data of the sensor are data relating to the temperature of product to be cooked, said product to be cooked being heated by means of the cooking vessel.

4. The method according to any one of the preceding claims, **characterized in that** the data of the sensor are transmitted by means of a data packet, wherein the data packet contains at least one start bit and/or at least one backup bit.

5. A sensor device (12) for an inductively heatable cooking vessel (2), said sensor device comprising:
- a sensor (1) for measuring a measured variable relating to the cooking vessel, in particular a temperature of product to be cooked, said product to be cooked being heated by means of the cooking vessel;
- an antenna (6) that can be inductively coupled to an induction heating coil (5) of an induction heating device (16), wherein the induction heating device uses a converter (4) to generate from a mains alternating voltage (UN) a high frequency control voltage (UA) for the induction heating coil;
- means (8) for changing an impedance of the antenna;
- means (9) for detecting a time region (ZB2) covering a zero crossing point of the mains alternating voltage; and
- a control device (10) that is adapted to capture data of the sensor and to control the means for changing the impedance of the antenna in such a manner that the impedance of the antenna is changed in dependence upon the captured data of the sensor during the time region covering the zero crossing point of the mains alternating voltage.

6. The sensor device according to claim 5, **characterized in that** the antenna comprises a coil (6).

7. The sensor device according to claim 6, **characterized in that** the means for changing the impedance of the antenna comprise a switching means (8) that is connected between terminals of the coil.

8. The sensor device according to any one of claims 5 to 7, **characterized in that** the means for detecting the time region covering the zero crossing point of the mains alternating voltage comprise means for measuring an antenna voltage, in particular an antenna voltage (UP) that has been rectified.

9. The sensor device according to any one of claims 5 to 8, **characterized by** an energy supply device (11) that is adapted to generate operating energy for the sensor device from a signal that is available at the antenna.

10. A cooking vessel (2) having a sensor device (12) according to any one of claims 5 to 9.

11. The cooking vessel according to claim 10, **characterized in that** the antenna, in particular in the form of a coil, is arranged on a cooking vessel base.

12. An induction heating device (16), comprising:
- an oscillator circuit (15) that includes an induction heating coil (5);
- a converter (4) that generates from a mains alternating voltage (UN) a high frequency control voltage (UA), wherein the high frequency control voltage is applied to the oscillator circuit in order to generate a high frequency magnetic alternating field for heating a cooking vessel (2);
- means (17) for detecting a time region (ZB1) covering a zero crossing point of the mains alternating voltage; and
- a control device (3) that is adapted to:
- interrupt the applying of the high frequency control voltage to the oscillator circuit during the time region covering the zero crossing point of the mains alternating voltage in order to cause a self-resonant oscillation of the oscillator circuit;
- determine a resonant frequency, in particular a resonant frequency change, of the self-resonant oscillation of the oscillator circuit; and
- decode transmitted data of a sensor (1) that is allocated to an inductively heated cooking vessel (2) in response to the determined resonant frequency and/or the resonant frequency change.

13. A system that is designed for implementing the method according to any one of claims 1 to 4, having:
- a sensor device (12) according to any one of claims 5 to 9, and
- an induction heating device according to claim 12.

14. The system according to claim 13, **characterized by** a cooking vessel (2) according to claim 10 or 11.

## Revendications

1. Procédé de transmission de données d'un capteur (1) qui est associé à un récipient de cuisson (2) pouvant être chauffé par induction à un dispositif de lecture (3), dans lequel
- une tension de commande à haute fréquence (UA) est générée à partir d'une tension alternative du réseau (UN) au moyen d'un convertisseur (4), un circuit oscillant (15) comprenant une bobine de chauffage par induction (5) est soumis à la tension de commande à haute fréquence pour générer un champ magnétique alternatif à haute fréquence afin de chauffer le récipient de cuisson,
**caractérisé par** les étapes consistant à :
- interrompre la soumission du circuit oscillant à la tension de commande à haute fréquence pendant une première plage de temps prédéfinie (ZB1) autour d'un passage à zéro de la tension alternative du réseau pour provoquer une oscillation à résonance propre du circuit oscillant,
- modifier une impédance d'une antenne (6) couplée par induction à la bobine de chauffage par induction qui est associée au récipient de cuisson en fonction de données du capteur à transmettre pendant une deuxième plage de temps (ZB2) qui se situe à l'intérieur de la première plage de temps, et
- décoder dans le dispositif de lecture les données du capteur ayant été transmises en évaluant une fréquence de résonance, en particulier une variation de la fréquence de résonance, de l'oscillation à résonance propre du circuit oscillant.

2. Procédé selon la revendication 1, **caractérisé en ce qu'**un circuit (7) est alimenté en énergie de fonctionnement sans contact au moyen du champ magnétique alternatif à haute fréquence, lequel circuit est conçu pour acquérir les données du capteur et pour modifier l'impédance de l'antenne couplée à la bobine de chauffage par induction en fonction des données à transmettre.

3. Procédé selon la revendication 1 ou 2, **caractérisé en ce que** les données du capteur sont des données de température d'aliments chauffés au moyen du récipient de cuisson.

4. Procédé selon l'une quelconque des revendications précédentes, **caractérisé en ce que** les données du capteur sont transmises au moyen d'un télégramme de données, dans lequel le télégramme de données contient au moins un bit de départ et/ou au moins un bit de sécurité.

5. Dispositif à capteur (12) destiné à un récipient de cuisson (2) pouvant être chauffé par induction, comportant
- un capteur (1) destiné à détecter une grandeur de mesure concernant un récipient de cuisson, en particulier une température d'aliments chauffés au moyen du récipient de cuisson,
- une antenne (6) qui peut être couplée par induction à une bobine de chauffage par induction (5) d'un dispositif de chauffage par induction (16), le dispositif de chauffage par induction génèrant à partir d'une tension alternative du réseau (UN) au moyen d'un convertisseur (4) une tension de commande à haute fréquence (UA) destinée à la bobine de chauffage par induction,
- des moyens (8) destinés à modifier une impédance de l'antenne,
- des moyens (9) destinés à détecter une plage de temps (ZB2) autour d'un passage à zéro de la tension alternative du réseau, et
- un dispositif de commande (10) conçu pour déterminer des données du capteur et pour commander les moyens afin de modifier l'impédance de l'antenne de manière à ce que l'impédance de l'antenne soit modifiée en fonction des données obtenues du capteur pendant la plage de temps autour du passage à zéro de la tension alternative du réseau.

6. Dispositif à capteur selon la revendication 5, **caractérisé en ce que** l'antenne comprend une bobine (6).

7. Dispositif à capteur selon la revendication 6, **caractérisé en ce que** les moyens destinés à modifier l'impédance de l'antenne comprennent un moyen de commutation (8) qui est inséré entre des bornes de la bobine.

8. Dispositif selon l'une quelconque des revendications 5 à 7, **caractérisé en ce que** les moyens destinés à détecter la plage de temps autour du passage à zéro de la tension alternative du réseau comprennent des moyens destinés à mesurer une tension d'antenne (UP), notamment redressée.

9. Dispositif selon l'une quelconque des revendications 5 à 8, **caractérisé par** un dispositif d'alimentation en énergie (11) conçu pour générer à partir d'un signal appliqué à l'antenne de l'énergie de fonctionnement destinée au dispositif à capteur.

10. Récipient de cuisson (2) comportant un dispositif à capteur (12) selon l'une quelconque des revendications 5 à 9.

11. Récipient de cuisson selon la revendication 10, **caractérisé en ce que** l'antenne, en particulier sous la forme d'une bobine, est disposée sur un fond du récipient de cuisson.

12. Dispositif de chauffage par induction (16), comprenant
- un circuit oscillant (15) comportant une bobine de chauffage par induction (5),
- un convertisseur (4) qui génère une tension de commande à haute fréquence (UA) à partir d'une tension alternative du réseau (UN), dans lequel le circuit oscillant est soumis à la tension de commande à haute fréquence pour générer un champ magnétique alternatif à haute fréquence afin de chauffer un récipient de cuisson (2),
- des moyens (17) destinés à détecter une plage de temps (ZB1) autour d'un passage à zéro de la tension alternative du réseau, et
- un dispositif de commande (3) qui est conçu pour
- interrompre la soumission du circuit oscillant à la tension de commande à haute fréquence pendant la plage de temps autour du passage à zéro de la tension alternative du réseau afin de provoquer une oscillation à résonance propre du circuit oscillant,
- déterminer une fréquence de résonance, en particulier une variation de la fréquence de résonance, de l'oscillation à résonance propre du circuit oscillant, et
- décoder des données transmises d'un capteur (1), qui est associé à un récipient de cuisson (2) pouvant être chauffé par induction, sur la base de la fréquence de résonance ou de la variation de la fréquence de résonance déterminée.

13. Système conçu pour mettre en ouvre le procédé selon l'une quelconque des revendications précédentes 1 à 4, comportant
- un dispositif à capteur (12) selon l'une quelconque des revendications 5 à 9 et
- un dispositif de chauffage par induction selon la revendication 12.

14. Système selon la revendication 13, **caractérisé par** un récipient de cuisson (2) selon la revendication 10 ou 11.
